Europäisches Patentamt

European Patent Office

Office européen des brevets

(19)

(11) Numéro de publication: **0 021 863**
**B1**

(12) **FASCICULE DE BREVET EUROPEEN**

(45) Date de publication du fascicule du brevet: **21.09.83**

(21) Numéro de dépôt: **80400551.0**

(22) Date de dépôt: **23.04.80**

(51) Int. Cl.³: **H 04 N 9/495,**
H 04 N 7/04, H 04 N 9/47
//H04N5/91

(54) **Procédé numérique de contrôle de la reproduction correcte d'un signal composite de télévision et dispositif mettant en oeuvre ce procédé.**

(30) Priorité: **31.05.79 FR 7913980**

(43) Date de publication de la demande:
**07.01.81 Bulletin 81/1**

(45) Mention de la délivrance du brevet:
**21.09.83 Bulletin 83/38**

(84) Etats contractants désignés:
**DE GB IT NL SE**

(56) Documents cités:
**DE - A - 2 608 240**
**DE - B - 2 511 682**
**FR - A - 2 181 043**
**FR - A - 2 225 893**
**GB - A - 1 268 136**
**GB - A - 1 486 914**
**US - A - 3 597 539**
**US - A - 4 015 286**
**US - A - 4 065 795**

(73) Titulaire: **THOMSON-BRANDT**
**173, Boulevard Haussmann**
**F-75379 Paris Cedex 08 (FR)**

(72) Inventeur: **Oprandi, Pierre**
**"THOMSON-CSF" - SCPI 173, Bld Haussmann**
**F-75360 Paris Cedex 08 (FR)**
Inventeur: **Romeas, René**
**"THOMSON-CSF" - SCPI 173, Bld Haussmann**
**F-75360 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

Courier Press, Leamington Spa, England.

Procédé numérique de contrôle de la reproduction correcte d'un signal
composite de télévision et dispositif mettant en oeuvre ce procédé

L'invention se rapporte à un procédé numérique de contrôle de la reproduction correcte d'un signal composite de télévision enregistré sur un support d'informations et à un dispositif mettant en oeuvre ce procédé.

L'invention s'applique plus particulièrement à un lecteur optique de vidéodisque transparent portant des informations gravées sur les deux faces.

Les normes actuelles d'un système de télévision en couleur de type SECAM (système à transmission de chrominance alternée ligne à ligne) définissent des signaux spécifiques destinés à identifier les lignes d'analyse de l'image portant un premier signal de chrominance dit D'R et celles portant un second signal de chrominance dit D'B. Ces signaux sont situés dans un intervalle de temps de neuf lignes consécutives, comprises dans le temps du retour de balayage de trame. Ce sont les lignes 7 à 15 de la première trame et les lignes 320 à 328 de la seconde trame. Ces signaux d'identification sont composés de salves de sous-porteuses de chrominance, d'une durée égale à celle de la ligne, temps de suppression ligne excepté.

Ce système d'identification, s'il convient parfaitement pour la diffusion publique en système SECAM, n'est cependant pas optimisé pour certaines applications, et en particulier dans le cas d'un enregistrement sur vidéodisque.

Il est également d'usage, dans l'art connu, de multiplexer des signaux impulsionnels de synchronisation standardisés avec le signal vidéo de luminance. Ce multiplexage se fait habituellement en amplitude pendant les intervalles de temps de retour de ligne et de trame. Cette méthode présente plusieurs inconvénients: d'une part, toute l'amplitude disponible de modulation du signal vidéo ne peut être utilisée, d'autre part, la synchronisation s'effectuant sur le flanc de ces signaux, toute détérioration de ces signaux ou toute superposition de signaux parasites peuvent entrainer des défauts de synchronisation.

Différents procédés et dispositifs ont été proposés permettant:

1°) de libérer en grande partie les intervalles de retour ligne et de retour trame;

2°) de transcoder de manière simple des signaux de télévision enregistrés selon un système de télévision de type séquentiel en tout système désiré, par exemple NTSC ou PAL;

3°) d'utiliser les intervalles libérés pour enregistrer les signaux sonores accompagnant les images de télévision sous forme numérique.

L'invention tire avantage du codage particulier utilisé sur un vidéodisque réalisé selon les procédés précités. Pour ce faire, en plus des signaux numériques représentant les voies son, une impulsion codée est insérée pendant l'intervalle de retour ligne. Il est déjà connu de par la demande de brevet allemand DE—A—2 608 240 d'insérer une suite de telles impulsions binaires, prenant alternativement la valeur "0" ou "1" d'une ligne de balayage à l'autre.

Ces impulsions sont utilisées dans un but de test pour effectuer une action immédiate sur la voie "son" lors de la reproduction d'un disque vidéo, ce dès l'apparition d'une discordance entre la suite d'impulsions lues et la suite monotone de "0" et "1" susmentionnée.

Le procédé de l'invention comprend, comme dans la demande précitée, les étapes d'insertion et de lecture d'une séquence d'états binaires de configuration temporelle préétablie et cet aspect constitue l'essentiel du préambule de la revendication 1.

Le procédé de l'invention prévoit en outre l'asservissement d'un état particulier à contrôler, par exemple l'alternance correcte des composants séquentielles des signaux de chrominance, et selon un des aspects les plus importants de l'invention, une insensibilisation de cet asservissement aux altérations transitoires rencontrées lors de la reproduction du signal composite de télévision.

L'invention n'est pas limitée au contrôle de cette fonction, en insérant d'autres impulsions codées, d'autres fonctions peuvent être contrôlées, et notamment le contrôle permanent de la face lue d'un vidéodisque transparent portant des informations gravées sur les deux faces.

L'invention a donc pour objet un procédé numérique de contrôle de la reproduction correcte d'un signal composite de télévision émis ou enregistré sur un support d'informations à la cadence du balayage des lignes d'une image comprenant une étape consistant en l'insertion, pendant le processes d'enregistrement ou d'émission du signal composite, à un instant prédéterminé de chaque intervalle de retour de balayage de ligne, d'au moins une impulsion codée en binaire dont la succession dans le temps des valeurs logiques prises par cette impulsion d'une ligne à l'autre de balayage représente une séquence d'états binaires de configuration temporelle préétablie; et une étape de lecture de cette séquence d'états binaires, pendant le processus de reproduction des signaux composites de télévision; caractérisé en ce qu'il comprend les étapes suivantes:

— génération pendant le processus de reproduction d'une séquence d'états binaires dont la succession dans le temps reproduit ladite configuration préétablie en synchronisme avec ledit balayage des lignes

— asservissement d'un état particulier à contrôler à l'évolution dans le temps de cette succession d'états binaires de configuration temporelle préétablie

— détection de l'apparition d'altération successives de ladite séquence lue d'états binaires par rapport à la configuration préétablie supérieure à une seuil prédéterminé

— et modification conditionnelle à cette détection dudit asservissement, de manière à le rendre insensible à des altérations de la séquence lue en nombre inférieur audit seuil.

L'invention a encore pour objet un dispositif pour l'asservissement d'états à contrôler à la valeur logique d'impulsions codées en binaire selon ce procédé, décrit dans les revendications 6 à 8.

L'invention sera mieux comprise et d'autres caractéristiques apparaîtront à l'aide de la description qui suit, en référence aux figures annexées:

— la figure 1 est un dispositif de codage numérique pour l'insertion d'une impulsion codée pendant l'intervalle de retour de balayage de ligne, identifiant les signaux de chrominance;

— la figure 2 est un diagramme illustrant la chronologie des principales opérations;

— la figure 3 est un dispositif de lecture des impulsions codées selon le procédé de l'invention;

— les figures 4 et 5 sont des diagrammes explicatifs du procédé de l'invention;

— les figures 6 et 7 illustrent une seconde variante de l'invention.

On peut selon un procédé avantageux coder les signaux sonores de façon numérique, ce après une conversion analogique-numérique et les bits représentant ces signaux sont insérés dans les intervalles de retour de balayage de ligne. Ces bits sont par exemple au nombre de 40 et n'occupent pas entièrement cet intervalle, il est donc possible d'y loger encore plusieurs bits.

Selon l'invention, au moins une impulsion supplémentaire sous la forme d'un bit codé en binaire prenant les valeurs logiques "1" ou "0", va être insérée dans l'intervalle laissé disponible, pendant le processus d'enregistrement. Chacune des impulsions représente un état à surveiller. Ces impulsions seront exploitées pendant le processus de lecture pour assurer la reproduction correcte des signaux de télévision composites enregistrés sur le vidéodisque.

Selon un premier aspect de l'invention, une première impulsion codée va permettre l'identification des signaux de chrominance. Cette impulsion codée se présente sous la forme d'un bit supplémentaire, par exemple le bit 41 (placé après les 40 bits codant le son), et prend les valeurs logiques "1" ou "0" suivant qu'elle se trouve placée au début d'une ligne portant le signal de chrominance appelé habituellement $D'_R$ ou le signal appelé $D'_B$. Les valeurs "1" ou "0" peuvent être affectées indifféremment aux signaux $D'_R$ ou $D'_B$. Par convention, dans la suite de la description, le niveau "0" correspondra aux lignes $D'_B$ et le niveau "1" aux lignes $D'_R$.

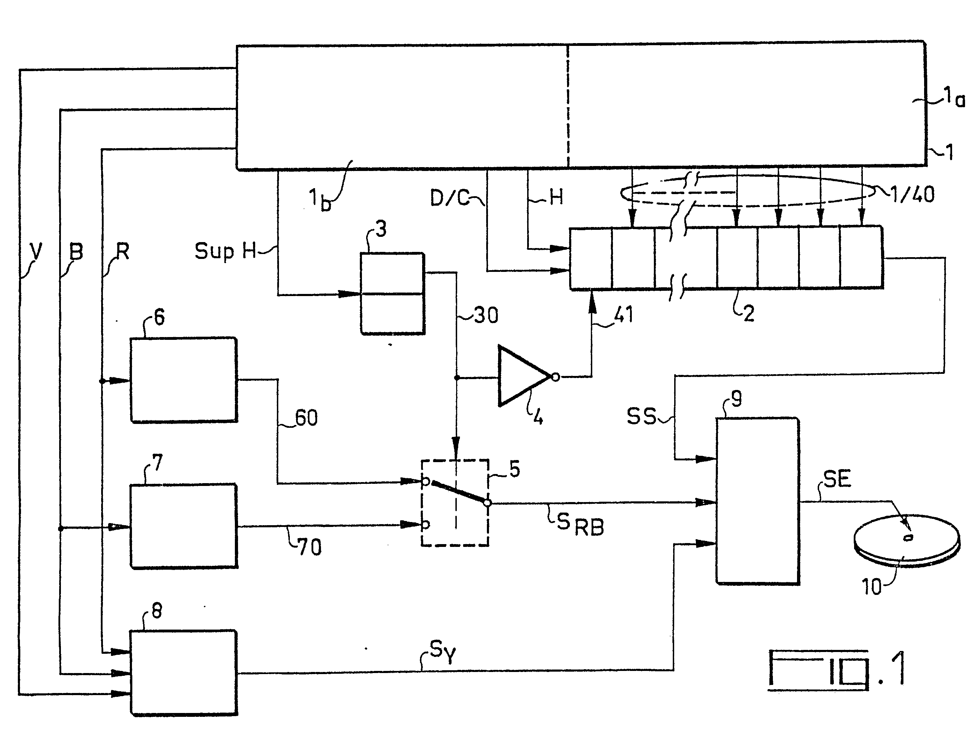

La figure 1 représente un dispositif de codage permettant de mettre en oeuvre le procédé de l'invention. L'indice 1 représente les circuits habituels d'un enregistreur de vidéodisque et en particulier les circuits de codage de la voie sonore $1_a$ et les circuits vidéo, d'horloge et de synchronisation $1_b$. Ces circuits ne seront pas décrits car ils sortent du cadre de l'invention et sont bien connus de l'homme de métier. Ces circuits fournissent par exemple 40 bits représentant la voie son, référencés 1/40. Les circuits vidéo $1_b$ fournissent les signaux de base: rouge (R), vert (V) et bleu (B), provenant d'un analyseur d'images (caméra, télécinéma, etc. ...) non représenté.

Ces signaux sont transmis à l'entrée de dispositifs connus 5, 6, 7 et 8, élaborant les signaux $D'_R$, $D'_B$, et Y (luminance). A la sortie de ces dispositifs les signaux $D'_R$ et $D'_B$ sont présents simultanément, à toutes les lignes de balayage. Ces signaux sont dirigés vers les entrées d'un commutateur électronique 5, via les liaisons 60 et 70. Ce commutateur est commandé par un signal présent à la sortie d'une bascule 3, via la liaison 30. La bascule 3 reçoit sur son entrée d'horloge un signal, Sup H, en synchronisme avec les signaux de suppression de ligne. D'une ligne de balayage à l'autre, le commutateur électronique 5 transmet alternativement les signaux présents à la sortie des dispositifs 6 et 7. Le commutateur éléctronique 5 est construit de telle façon qu'il laisse passer vers la sortie $S_{RB}$ le signal $D'_R$ lorsque la liaison 30 est portée au niveau logique "1" et le signal $D'_B$ lorsque la liaison 30 est portée au niveau logique "0".

Le signal présent sur la sortie vraie de la bascule 3 est également transmis sur l'entrée 41 d'un registre à décalage à entrées parallèles et sortie série 2. Les entrées 1 à 40 reçoivent les bits provenant du codeur son $1_a$. Le signal fourni par la bascule bistable 3 est au préalable inversé par le circuit inverseur 4. En effet, le bit 41 au début d'une ligne de rang n doit être chargé dans le registre avant le début de cette ligne par l'impulsion de chargement de registre D/C. Ce chargement s'effectuant sur la ligne de rang n − 1, il convient d'inverser le signal logique de la bascule 3 pour qu'il prenne à l'entrée du registre 2, su la ligne de rang n − 1, le niveau logique qu'il aura sur la ligne de rang n, à l'entrée de commande du commutateur 5. Pendant l'intervalle de suppression de ligne, les bits enregistrés dans le registre 2 sont décalés vers sa sortie série SS par des impulsions d'horloge H. Les bits son, suivis du bit d'identification de chrominance, sont donc dirigés vers des circuits de modulation 9. Ces circuits 9 reçoivent également les signaux $S_{RB}$ et $S_Y$. Ce dernier signal est le signal de luminance obtenu par matriçage des trois couleurs primaires V, B, R. Ce matriçage est élaboré par le dispositif 8 bien connu de l'homme de métier. Il en est de même des dispositifs 6 et 7 et 9, qui ne seront pas décrits. Les signaux en sortie du circuit 9: SE comprennent les signaux composites de télévision en couleur, des signaux de service, les signaux numériques des voies son sinsi que les impulsions codées selon le procédé de l'invention. Ces différents signaux sont enregistrés sur un vidéodisque 10, par tout moyen approprié.

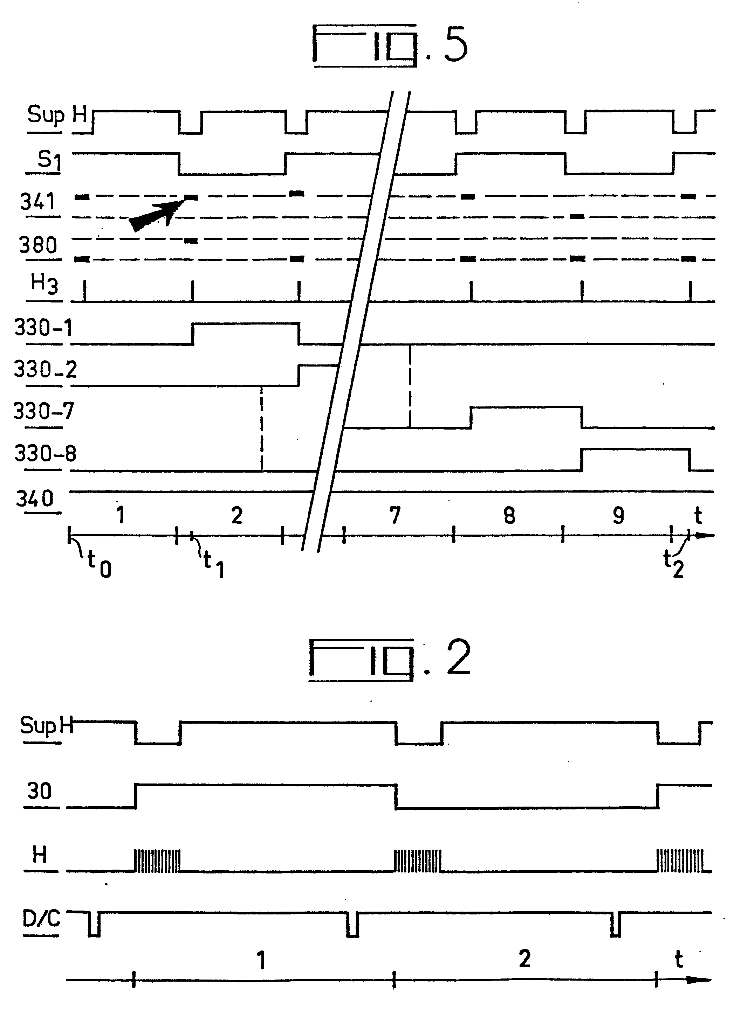

La figure 2 illustre la chronologie des principaux signaux du dispositif de la figure 1. Sur la première ligne, les signaux "Sup H" représentent les signaux de suppression de ligne, la deuxième ligne "30" représente les signaux présents à la sortie de la bascule bistable 3, commandant le commutateur 5. La ligne "H" représente les salves d'impulsion d'horloge et la ligne "D/C" représente les impulsions de chargement transmis sur l'entrée correspondante du registre à décalage 2. Sur l'axe des temps, sont représentées deux lignes consécutives de balayage 1 et 2.

Au décodage il est nécessaire de reconnaître, en utilisant le bit 41 placé à cet effet à la suite du train binaire codant le son, les lignes de balayage portant le signal de chrominance $D'_R$ et celles portant le signal $D'_B$. Pour ce faire, il suffit de reconstituer en synchronisme avec le 41 ème bit le signal de la bascule bistable 3 du codeur (signal de niveau "1" sur la ligne de balayage $D'_R$ et "0" sur la ligne $D'_B$). Ce signal prend donc le niveau "1" sur les lignes portant à leur début le bit 41 au niveau "1" et le niveau "0" sur les lignes portant à leur début le bit 41 au niveau "0". Il suffirait dans un système simplifié de recopier au début de la ligne, le niveau du 41 ème bit, servant au contrôle de la fonction de chrominance et de le conserver jusqu'à la ligne suivante pour obtenir le signal S. Il arrive cependant que pour des raisons diverses le bit 41 soit illisible ou erronné (perte de signal, mauvaise lecture, etc. ...), ce qui introduit une inversion brève mais cependant gênante du signal d'identification de chrominance S. Il se produit alors, pendant une ou plusieurs lignes de balayage, de temps à autre, une erreur d'identification du signal de chrominance entraînant une reproduction incorrecte des couleurs.

Pour pallier cet inconvénient l'invention propose des dispositions permettant une protection efficace contre les erreurs de lecture ou autres pertes momentanées de signal. Ceci constitue un autre aspect de l'invention.

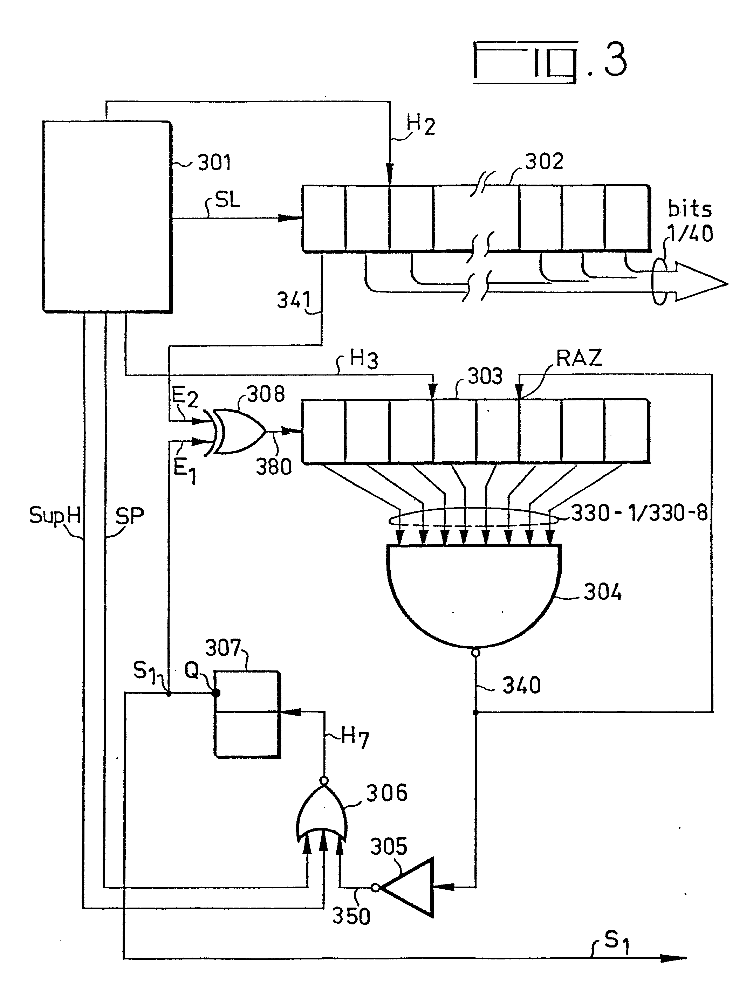

Le dispositif de lecture des impulsions codées de contrôle selon le procédé de l'invention ainsi que les dispositions prises pour protéger ces impulsions vont être décrits en regard des figures 3 à 5.

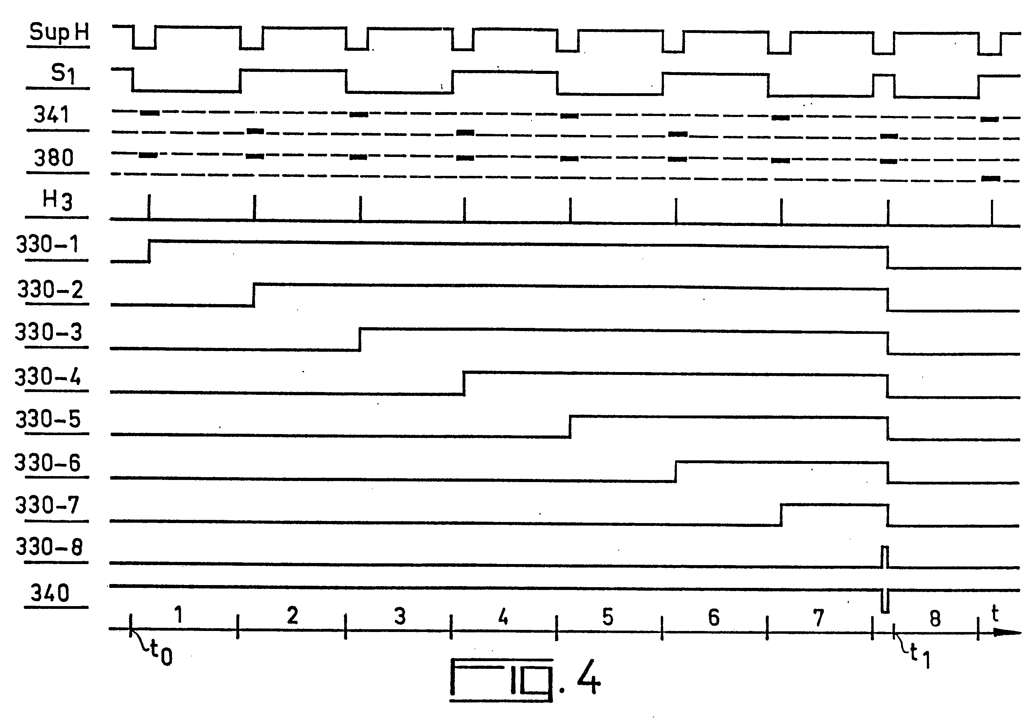

La figure 3 décrit le dispositif de lecture selon l'invention. Sous la référence 301, sont représentés les circuits habituels d'un lecteur de vidéodisque. Ces circuits connus de l'homme de métier ne seront pas détaillés, ils fournissent notamment sur la sortie SL les signaux numériques de la voie son ainsi que les impulsions de contrôle codées selon le procédé de l'invention, lus sur le vidéodisque. Ces circuits fournissent également des signaux d'horloge et de synchronisation: Sup H, $H_2$, $H_3$ et SP, élaborés en synchronisme avec la lecture des informations enregistrées sur le vidéodisque. Les signaux numériques séries SL sont transmis à un registre à décalage 302, à entrée série et sorties parallèles et décalés au rythme du signal d'horloge $H_2$ sous-multiple de la fréquence ligne. Les bits 1 à 40 sont les bits de son, transmis à un dispositif de décodage non représenté. Le bit 41 représentant l'impulsion codée selon l'invention est transmis à un second registre à décalage à entrée série et sorties parallèles 303, via une porte logique "OU-EXCLUSIF" 308 et la liaison 380 connectée à l'entrée de ce registre. Le bit 41 est disponible sur la sortie 341 du registre à décalage 2 à l'instant correspondant à l'impulsion de synchronisation $H_3$ élaborée à partir du signal d'horloge $H_2$. Les signaux correspondants sont illustrés sur le chronogramme de la figure 4. Elle autorise l'entrée, à chaque ligne de balayage, du bit 41 dans le registre à décalage 303. La porte logique "OU-EXCLUSIF" 308 joue le rôle d'un inverseur commandé par le signal $S_1$ de la sortie vraie Q d'une bascule bistable 307. Ce signal peut être utilisé comme signal d'identification de chrominance et sert donc au contrôle de l'alternance correcte des signaux de chrominance pendant le processus de lecture. Cette alternance est asservie à la valeur logique du bit 41. La bascule 307 change d'état à chaque impulsion de suppression de ligne qu'elle reçoit sur son entrée d'horloge $H_7$ par l'intermédiaire de la porte "NON-OU" 306. Cette porte reçoit sur une de ses entrées un signal d'échantillonnage, Sup H, au rythme des signaux de suppression de ligne. Ces signaux sont également illustrés sur le chronogramme de la figure 4. Les pointillés des lignes correspondant aux signaux sur les liaisons 341 et 380 indiquent les intervalles de temps pendant lesquels ces signaux ne sont pas significatifs, seules sont à prendre en compte les parties en traits gras, c'est-à-dire correspondant essentiellement aux instants d'apparition des impulsions brèves d'horloge $H_3$. L'axe des temps t représente la succession de huit lignes consécutives de balayage référencées 1 à 8.

Il est supposé qu'à l'instant $t_0$, le signal $S_1$ servant à l'identification de chrominance se trouve dans un état logique inverse à ce qu'il devrait être (état "0" sur la ligne $D'_R$, état "1" sur la ligne $D'_B$ au lieu de "1" sur $D'_R$ et "0" sur $D'_B$). L'entrée $E_1$ de la porte logique "OU-EXCLUSIF" 308 va se trouver au niveau logique "0" sur la ligne portant le signal $D'_R$. Cette porte laisse donc passer sans modification le bit 41, présent sur son entrée $E_2$ et qui se trouve au niveau logique "1" sur cette ligne $D'_R$.

Au balayage suivant, l'entrée $E_1$ de la porte 308 est portée au niveau logique "1" et laisse passer en l'inversant le bit 41, présent sur son entrée $E_2$ et qui se trouve être au niveau "0" sur la ligne de balayage $D'_B$. Le signal présent sur la sortie 380 de la porte 308 va être porté au niveau logique "1" à toutes les lignes de balayage. Ces bits au niveau "1" sont appliqués à l'entrée du registre à décalage 302 et chargés dans le registre par les impulsions d'horloge $H_3$. Les sorties 330—1 à 330—8 du registre prennent tour à tour la valeur "1" et à la huitième impulsion d'horloge $H_3$, toutes les sorties sont portées au niveau logique "1". Ces sorties sont transmises aux entrées correspondantes d'une porte logique 304. Lorsque toutes les entrées de cette porte 304 sont portées au niveau logique "1", la sortie 340 prend le niveau logique "0". Cette sortie est connectée à l'entrée de remise à zéro: RAZ du registre à décalage 303. Le basculement de l'état "1" à l'état "0" de la sortie 340 de la porte 304 remet du même coup à zéro toutes les sorties 330—1 à 330—8 de ce registre, ce qui provoque le retour au niveau logique "1" de la sortie 340 de la porte 304. La liaison 340 transmet donc, via un inverseur 305 et liaison 350, une impulsion positive brève à l'une des entrées de la porte logique "NON-OU" 306. Cette impulsion est transmise à la bascule bistable 307 provoquant un changement d'état de la sortie Q de cette bascule, donc du signal $S_1$.

Après ce changement d'état, la bascule 307 continue à fonctionner au rythme des impulsions de suppression de ligne mais en présentant cette fois un état de sortie prenant le niveau logique "1" sur les lignes de balayage $D'_R$ et "0" sur les lignes de balayage $D'_B$, ce qui correspond à un signal d'identification de chrominance $S_1$ correct.

Cette entrée $E_1$ de la porte 308 étant au niveau logique "00" sur lignes de balayage $D'_B$, laisse passer sans modification le bit 41 qui est au niveau "0" sur ces lignes. Par contre, cette même entrée $E_1$ étant au niveau "1" sur les lignes $D'_R$, laisse passer en l'inversant le bit 41 qui est au niveau "1" sur ces lignes. Les bits transmis au registre à décalage 303 possèdent donc tous le niveau logique "0". Par conséquent, les sorties 330—1 à 330—8 restent en permanence à "0" ainsi que les entrées de la porte 304, la sortie de cette porte 304 ne délivrant plus d'impulsions tant que la phase du signal identifiant la chrominance $S_1$ reste correcte.

Si maintenant une erreur affecte un ou plusieurs bits d'identification de chrominance, cela se traduit par le passage au niveau "1" de l'entrée du registre à décalage et l'enregistrement de ce bit. Ce bit est ensuite décalé dans le registre au rythme des impulsions de ligne $H_3$. Cependant, il faut qu'il se produise huit erreurs sur huit lignes de balayage consécutives, pour que toutes les sorties du registre 303 soient portées au niveau logique 1 et qu'ainsi apparaisse à la sortie 340 de la porte 304 une impulsion faisant changer d'état la bascule bistable 307. Cette éventualité est très peu probable.

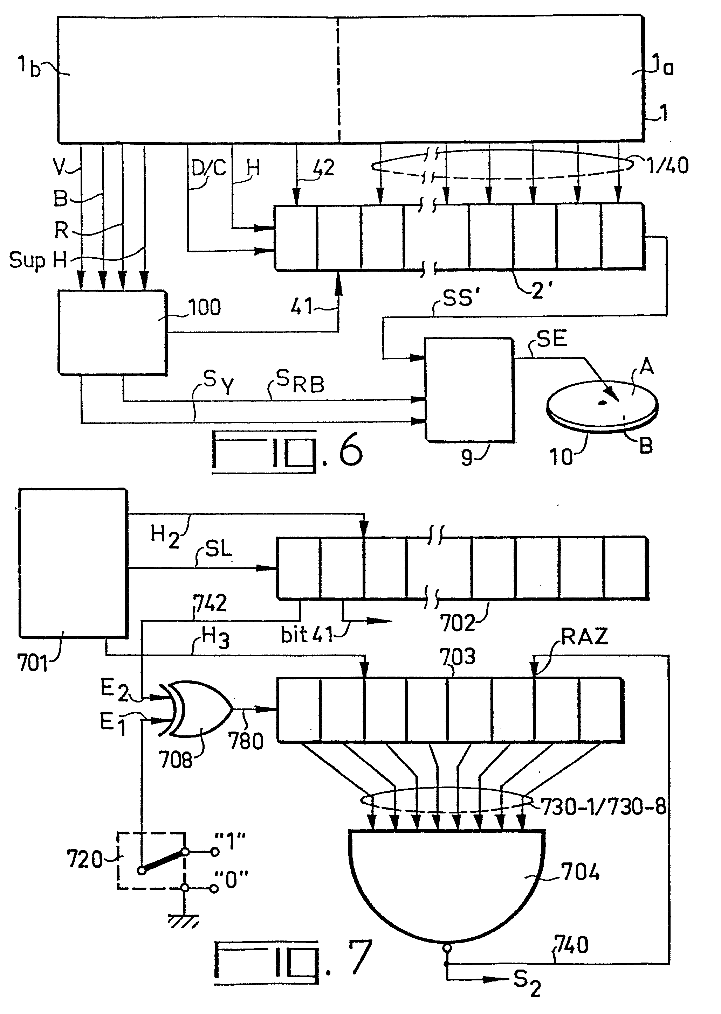

La figure 5 illustre le cas qui vient d'être décrit d'une altération isolée. Au temps $t_0$ les signaux d'identification de chrominance S possèdent une phase correcte. A l'instant $t_1$ le bit 41 repéré sur la figure par une flèche est erroné. Il s'en suit qu'un bit de niveau "1" est chargé dans le registre à décalage (sur la ligne "330—1" de la figure 4) A la ligne de balayage suivante, le bit 41 étant de nouveau correct, un bit de niveau "0" va être entré dans le registre à décalage 303. L'erreur va se matérialiser par une impulsion se propageant d'étage en étage dans le registre 303 (lignes "330—3" à "330—8" de la figure). Après la ligne de balayage 9 c'est à dire après l'instant $t_2$, cette impulsion va disparaître. Les sorties successives 330—1 à 330—8 et les entrées correspondantes de la porte 304 vont se trouver successivement à un niveau logique "1". Cependant il aurait fallu que les huit entrées de la porte 304 se trouvent à ce même niveau pour produire l'impulsion de changement d'état sur l'entrée d'horloge de la bascule bistable 307.

Les dispositions retenues permettent donc une très bonne protection contre les altérations rencontrées pendant le processus de transcription. Cette protection peut d'ailleurs si nécessaire être augmentée ou diminuée simplement en changeant le nombre d'étage du registre à décalage 303, ainsi que le nombre d'entrées correspondantes de la porte "NON-ET" 304.

Dans les cas particuliers de l'arrêt sur image ou d'artifices tels que ralenti ou accéléré, la tête de lecture du vidéodisque comprise dans les circuits référencés 1 sur la figure 3, effectue un saut commandé en cours de lecture d'une piste sur la piste immédiatement voisine (saut arrière d'une piste à chaque tour pour obtenir un arrêt sur image). Du fait que l'enregistrement comprend exactement une image complète de télévision par tour de disque et par la même, un nombre impair de lignes (par exemple 625, 525) la séquence de chrominance se trouve inversée à chaque saut, donc l'impulsion codée selon le procédé de l'invention et lue par la tête le lecture sera incorrecte. Il serait dans cette hypothèse nécessaire d'attendre au minimum huit lignes après le saut (temps de remplissage du registre 303) pour retrouver une phase correcte du signal S. Cet inconvénient peut être évité en envoyant sur la 3èmè entrée de la porte "NON-OU" 6 une impulsion SP brève à chaque commande de saut de piste, cette impulsion, occasionnant le changement d'état de la bascule bistable 307, remet immédiatement en phase le signal $S_1$.

Ce signal $S_1$ possédant une phase correcte au moyen de dispositif qui vient d'être décrit peut être utilisé pour synchroniser des modulateurs SECAM, PAL ou NTSC destinés à mettre aux normes du standard de télévision couleur désiré le signal fourni par le lecteur de vidéodisque. Cet aspect a été décrit notamment dans le brevet US N° 4 095 254.

Les signaux codés selon l'invention, peuvent être utilisés pour contrôler d'autres fonctions que celle de l'alternance de la chrominance. En particulier, sur un vidéodisque transparent portant des informations gravées sur les deux faces (A et B), l'utilisation d'une impulsion codée supplémentaire, par exemple un 42ème bit permet le contrôle permanent de la face lue. Les figures 6 et 7 illustrent cette possibilité.

La figure 6 correspond au codeur de la figure 1. Le circuit 1b fournit un 42ème bit identifiant la face de vidéodisque 10 sur laquelle va être inscrit les signaux composites de télévision, des signaux de service, les signaux des voies sonores et les impulsions codées selon l'invention. Ce bit va être transmis à une 42ème entrée d'un registre à décalage 2', analogue au registre 2 de la figure 1 mais comportant un étage supplémentaire. Les circuits portant la référence générale 100 ainsi que les circuits de génération des signaux $S_{RB}$ et $S_Y$ sont les circuits de codage du 41ème bit illustrés sur la figure 1. Le bit 42 chargé en même temps que les bits son 1 à 40 et que le 41ème bit constituant l'impulsion codée identifiant les signaux de chrominance vont être chargés dans le registre 2' à l'aide des impulsions d'horloge H. Ces bits sont ensuite décalés et transmis sur la sortie série SS' du registre 2'.

Lors du processus de lecture, le bit 42, ainsi que les bits 40 à 41, est enregistré dans un registre 702 et va être transmis de la même manière que précédemment pour le bit 41 (figure 3) à un registre à décalage 703 (figure 7). Cette transmission se fait également via une porte logique "OU-EXCLUSIF" 708 et la liaison 780. Les sorties 730—1 à 730—8 de ce registre à décalage 703 sont transmises à leur tour aux entrées d'une porte "NON-ET" 704 dont la sortie 740 est connectée à l'entrée de remise à zéro du registre RAZ. La seconde entrée de la porte 708 est connectée à un dispositif 720 de choix de face lue. Ce dispositif est symbolisé sur la figure 7 par un commutateur à deux voies. Ce commutateur permet de transmettre un niveau logique "1" ou "0" à la seconde entrée de la porte logique 708. Par convention, la valeur logique "1" représente la face A du vidéodisque et la valeur logique "0" la face B. Le fonctionnement du dispositif décrit sur la figure 7 est analogue au fonctionnement du dispositif décrit sur la figure 3. La tête de lecture compris dans les circuits référencés 701 restitue pendant l'intervalle de retour de ligne de balayage (et ce pour chaque ligne de balayage) le bit 42. Dans le cas d'un vidéodisque à lecture optique portant des gravures sur les deux faces du disque, la lecture peut se faire par focalisation d'un spot lumineux au niveau de l'une ou de l'autre de ces faces. Cette focalisation est commandée par un circuit d'asservissement. Ce circuit sort du cadre de l'invention et ne sera pas décrit. En cas de fonctionnement incorrect, le point de focalisation peut quitter la surface de la face de lecture désirée. Le bit 42 lu va être désormais à la valeur logique "0". Il s'en suit qu'au bout de huit lignes de balayage consécutives toutes les sorties 730—1 à 730—8 vont passer au niveau logique "1". La sortie de la porte logique NON-ET 704 va passer au niveau "0". Cette transition occasionne la remise à zéro de tous les étages du registre à décalage 703. Le signal présent à la sortie de la porte 4 reprend la valeur "1". Le dispositif de la figure 7 a donc produit sur sa sortie $S_2$ une impulsion de courte durée. Cette impulsion peut être utilisée par le circuit d'asservissement pour refocaliser le spot lumineux de lecture au niveau de la face désirée.

Lorsqu'il se produit une erreur de lecture du bit 42 ou tout altération pendant la transcription, le dispositif fonctionne de façon analogue à celui de la figure 3, c'est-à-dire qu'il faut que cette erreur se reproduise pendant huit lignes de balayage consécutives pour occasionner un défaut de fonctionnement.

Ce défaut disparaîtra d'ailleurs au bout de huit autres lignes de balayage, si le bit 42 lu est à nouveau correct.

Si l'opérateur désire changer de face lue, il suffit de faire basculer le commutateur 720 d'une position à l'autre, par exemple de la position "1" logique à la position "0" logique. Il s'en suit que les bits présents sur la sortie 780 vont prendre la valeur "1" et être enregistrés dans le registre à décalage 703. Après huit lignes de balayage consécutives, toutes les sorties 730—1 à 730—8 vont être à la valeur logique 1 et le processus précédemment décrit va se renouveler: une impulsion de faible durée va être transmise par la sortie $S_2$ au circuit d'asservissement et provoquer un changement de face lue. Il va de soi que le commutateur 720, représenté sur la figure 7 par un commutateur mécanique à deux positions, peut être un commutateur électronique et être commandé par d'autres circuits électroniques non décrits, pour réaliser un fonctionnement automatique.

D'autres impulsions codées peuvent être également insérées pour contrôler des fonctions supplémentaires. A titre d'exemple non limitatif, une troisième impulsion, c'est à dire dans 1' exemple qui a été décrit un bit N° 43, pourra être utilisée pour détecter la fin de face lue et imposer aux organes de lecture un retour au point initial ou un changement automatique de face lue. Dans une autre variante d'exécution des impulsions codées peuvent représenter des parties prédéterminées d'un enregistrement, au lieu des deux faces d'un disque, ces parties prédéterminées pouvant se trouver sur une même face de disque ou au contraire réparties sur les deux faces.

Pour une réalisation concrète des dispositifs qui ont été décrits en relation avec les figures 1, 3, 6 et 7 les circuits intégrés des types suivants, disponibles dans le commerce peuvent être utilisés à titre d'exemples non limitatifs:

| | |
|---|---|
| registres à décalage à entrée série et sorties parallèles (fig. 3 et 7:2, 3) | circuits SN 74164N |
| registres à décalage à entrées parallèles et sortie série (fig. 1 et 6:2) | circuits SN 74165N |
| bascules bistables (fig. 1:3, fig. 3:7) | circuits SN 7474N |
| inverseurs (fig. 1:4, fig. 3:5) | circuits SN 7404N |
| portes "NON-OU" (fig. 3:6) | circuits SN 7427N |
| portes "OU-EXCLUSIF" | circuits SN 7486N |
| portes NON-ET (fig. 3 et 7:4) | circuits SN 7430N |

Tous ces circuits intégrés sont commercialisés par la firme TEXAS INSTRUMENTS; les circuits commutateurs 5 (figure 1) et 10 (figure 7) peuvent être des circuits AD 7512 de la firme ANALOG DEVICE.

L'invention n'est pas limitée aux dispositifs qui viennent d'être décrits. L'invention peut être utilisée dans tous systèmes d'enregistrement ou de transmission de signaux de télévision à chrominance de type séquentielle, autres que les appareils à vidéodisque, sans sortir du cadre de l'invention.

## Revendications

1. Procédé numérique de contrôle de la reproduction correcte d'un signal composite de télévision émis ou enregistré sur un support d'informations (10) à la cadence du balayage des lignes d'une image, comprenant une étape consistant en l'insertion, pendant le processus d'enregistrement ou d'émission du signal composite, à un instant prédéterminé de chaque intervalle de retour de balayage de ligne, d'au moins une impulsion codée en binaire (41) dont la succession dans le temps des valeurs logiques prises par cette impulsion d'une ligne à l'autre de balayage représente une séquence d'états binaires de configuration temporelle préétablie; et une étape de lecture de cette séquence d'états binaires, pendant le processus de reproduction des signaux composites de télévision; caractérisé en ce qu'il comprend les étapes supplémentaires suivantes:

— génération pendant le processus de reproduction d'une séquence d'états binaires dont la succession dans le temps reproduit ladite configuration préétablie en synchronisme avec ledit balayage des lignes

— asservissement d'un état particulier a contrôler à l'évolution dans le temps de cette succession d'états binaires de configuration temporelle préétablie

— détection de l'apparition d'altération successives de ladite séquence lue d'états binaires par rapport à la configuration préétablie supérieure à un seuil prédéterminé

— et modification conditionnelle à cette détection dudit asservissement, de manière à le rendre insensible à des altérations de la séquence lue en nombre inférieur audit seuil.

2. Procédé selon la revendication 1, caractérisé en ce que, le signal composite comprenant des signaux de chrominance de type séquentiel, une première impulsion codée en binaire prend alternativement d'une ligne à la suivante, les valeurs "1" et "0" logiques pour représenter, respectivement, les composantes rouges ($D'_R$) et bleues ($D'_B$) du signal de chrominance; ledit état particulier à contrôler étant l'alternance correcte des composantes du signal de chrominance.

3. Procédé selon la revendication 2, charactérisé en ce que l'impulsion codée représentant l'une des composantes du signal de chrominance, émise ou enregistrée pendant la ligne de balayage de rang n, est insérée, après inversion logique, à un instant prédéterminé de l'intervalle de retour de la ligne de balayage de rang $n - 1$.

4. Procédé selon la revendication 1, caractérisé en ce qu'une deuxième impulsion (42) codée en binaire prend les valeurs "1" ou "0" logiques, représentant un signal composite de télévision enregistré respectivement sur une première partie et une seconde partie du support d'informations; ledit état particulier à contrôler étant la reproduction du signal enregistré sur l'une desdites partie du support d'information préablement sélectionnée.

5. Procédé selon la revendication 4, caractérisé en ce que ces deux parties sont les deux faces (A, B) d'un support d'informations tournant (10).

6. Dispositif pour l'asservissement d'états à contrôler à la valeur logique d'impulsions codées en binaire selon le procédé de l'une quelconque des revendications 1 à 5, comprenant des moyens de lecture (301) et des moyens de mémorisation (302) des impulsions codées en binaire; caractérisé en ce qu'il comprend en outre au moins une mémoire circulante (303) comportant un nombre prédéterminé d'étages dans laquelle est introduite répétitivement, via une première entrée d'une porte logique "OU-EXCLUSIF" (308) deux entrées une première impulsion codée en binaire (41) enregistrée dans lesdits moyens de mémorisation (302), la circulation se faisant au rythme de la cadence de balayage de ligne ($H_3$), et un circuit de détection (304) recevant sur ses entrées les sorties de tous les étages de la mémoire circulante (304) et délivrant sur sa sortie une impulsion transmise à une entrée de réinitialisation (RAZ) de la mémoire circulante lorsque toutes les sorties sont à une même valeur logique et une bascule bistable (307) dont la sortie est reliée à l'autre entrée de la porte logique "OU-EXCLUSIF", et recevant sur une entrée d'horloge ($H_7$) via un inverseur (305) et une porte logique "NON-OU" (306), les signaux présents à la sortie du circuit de détection (304), la porte logique "NON-OU" (306) recevant en outre un signal d'échantillonnage (Sup H) au rythme de la cadence de balayage ligne.

7. Dispositif selon la revendication 6, caractérisé en ce qu'il comporte une seconde mémoire circulante (703) comportant un nombre prédéterminé d'étages dans laquelle est introduite une seconde impulsion codée en binaire (42), via la première entrée d'une seconde porte logique "OU-EXCLUSIF" (708); et en ce qu'il comporte en outre un dispositif de commande (720) dont la sortie est reliée à la seconde entrée de la seconde porte logique "OU-EXCLUSIF", le dispositif de commande (720) fournissant un signal binaire de valeur logique préalablement établie "1" ou "0", de telle sorte que les secondes impulsions codées en binaire enregistrées dans les moyens de mémorisation (702) sont introduites dans la seconde mémoire circulante (703) au rythme de la cadence de balayage de ligne, sous leur forme vraie ou sans leur forme inversée et un second circuit de détection (704) recevant sur ses entrées les sorties de tous les étages de la seconde mémoire circulante et délivrant sur sa sortie une impulsion ($S_2$) lorsque toutes les sorties sont à une même valeur logique, la sortie étant en outre reliée à une entrée de réinitialisation (RAZ) de la seconde mémoire circulante.

8. Dispositif selon l'une quelconque des revendications 6 ou 7, caractérisé en ce que chaque mémoire circulante (303, 703) est constitué par un registre à décalage à huit étages, et chaque circuit de détection (304, 704) est constitué par une porte-logique "NON-ET" à huit entrées, dont la sortie est reliée à une entrée de remise à zéro (RAZ) du registre à décalage.

## Patentansprüche

1. Numerisches Kontrollverfahren der fehlerfreien Wiedergabe eines zusammengesetzten Fernsehsignals, das von einem Informationsträger (10) im Abtasttakt der Zeilen eines Bildes ausgesendet oder darauf aufgezeichnet wird und welches einen Verfahrensschritt beinhaltet, der darin besteht, dass während des Aufzeichnungs- oder Sendevorganges des zusammengesetzten Signals bei jedem Rücklaufintervall der Abtastzeile zu einem vorherbestimmten Zeitpunkt mindestens ein binär codierter Impuls (41) eingefügt wird, dessen zeitliche Abfolge der logischen, durch diesen Impuls von einer Zeile zur anderen aufgenommenen Werte eine Folge von binären Zuständen in vorbestimmter zeitlicher Anordnung darstellt; und einen Leseverfahrensschritt zum Lesen dieser Folge von binären Zuständen während des Wiedergabeprozesses der zusammengesetzten Fernsehsignale; dadurch gekennzeichnet, dass es folgende zusätzliche Verfahrensschritte umfasst:

— Während des Wiedergabevorganges erfolgende Erzeugung einer Folge von binären Zuständen, deren zeitliche Abfolge die besagte vorbestimmte Anordnung im Gleichlauf mit der besagten Zeilenabtastung wiedergibt.

— Steuern eines besonderen, im zeitlichen Ablauf dieser vorbestimmten Folge von binären Zuständen im Bezug auf die vorbestimmte Gestaltung zu kontrollierenden Zustands.

— Ermittlung des Auftretens von aufeinanderfolgenden Abweichungen der besagten, aus dem Ablesen von binären Zuständen sich ergebenden Folge in einem grösseren Ausmass als ein vorbestimmter Schwellenwert.

— Durch diese Ermittlung bedingte Abänderung der genannten Steuerung, derart, dass dieselbe für die numerische, unterhalb des Schwellenwertes liegenden Änderungen der abgelesenen Folge unempfindlich gemacht wird.

2. Verfahren nach Anspruch 1, dadurch gekennzeichnet, dass — mit dem zusammengesetzten, mehrere aufeinanderfolgende Farbtonsignale beinhaltenden Signal — ein erster binär codierter Impuls von einer Zeile zur anderen abwechselnd die logischen Werte "1" und "0" annimmt, um jeweils die roten ($D'_R$) und blauen ($D'_B$) Komponenten darzustellen; wobei der besagte zu kontrollierende Zustand das fehlerfreie Abwechseln der Komponenten des Farbsignals ist.

3. Verfahren nach Anspruch 2, dadurch gekennzeichnet, dass der eine der Komponenten des Farbtonsignals darstellende, codierte Impuls, der im Verlauf der Abtastzeile n ausgesendet oder aufgezeichnet wird nach einer logischen Umkehrung zu einem vorher bestimmten Zeitpunkt des Rücklaufintervalls der Abtastzeile n — 1 eingefügt wird.

4. Verfahren nach Anspruch 1, dadurch gekennzeichnet, dass ein zweiter binär codierter Impuls (42) die logischen Werte "1" oder "0" annimmt, welcher ein zusammengesetztes Fernsehsignal darstellt, das beiderseits auf einen ersten Teil und einen zweiten Teil des Informationsträger aufgezeichnet ist; wobei der besagte besondere, zu kontrolliernde Zustand die Wiedergabe des, auf einem der besagten Teile des vorgewählten Informationsträger aufgezeichneten Signals ist.

5. Verfahren nach Anspruch 4, dadurch gekennzeichnet, dass die zwei Teile die zwei Seiten (A, B) eines drehbaren Informationsträgers sind.

6. Vorrichtung zum Steuern von zu kontrollierenden Zuständen gemäss des logischen Wertes von, entsprechend dem Verfahren nach einem der Ansprüche 1 bis 5 binär codierten Impulsen, die Lesemittel (301) und Speichermittel (302) der binär codierten Impulse besitzt; dadurch gekennzeichnet, dass sie zudem mindestens einen, eine vorherbestimmte Anzahl von Stufen aufweisenden zirkulierenden Speicher besitzt, in dem in Wiederholung über einen ersten Eingang eines logischen "ODER-EXCLUSIV"-Gatters (308) mit zwei Eingängen ein erster binär codierter Impuls (41) eingegeben wird, der in die besagten Speichermittel (302) eingebracht wird, wobei die Strömung im Rythmus des Takts der Zeilenabtastung (H3) erfolgt, und eine Spürschaltung (304), die an ihren Eingängen die Ausgänge aller Stufen des zirkulierenden Speichers (304) erhält und an ihrem Ausgang einen Impuls liefert, der an einen Zerorückstellungseingang (RAZ) des zirkulierenden Speichers übermittelt wird, wenn alle Ausgänge den gleichen logischen Wert haben und eine bistabile Kippschaltung (307), deren Ausgang mit dem anderen Eingang des logischen "ODER-EXCLUSIV"-Gatters verbunden ist und an einen Uhreingang (H7) über einen Inverter (305) und ein logisches "NEIN-ODER"-Gatter die am Ausgang der Spürschaltung (304) vorhandenen Signale erhält, wobei das logische "NEIN-ODER"-Gatter (306) zudem ein Probesignal (SupH) im Rythmus des Takts der Zeilenabtastung erhält.

7. Vorrichtung nach Anspruch 6, dadurch gekennzeichnet, dass sie einen zweiten, eine vorbestimmte Anzahl von Stufen besitzenden zirkulierende Speicher (703) enthält, in den ein zweiter binär codierter Impuls (42) über den ersten Eingang eines zweiten "ODER-EXCLUSIV"-Gatters (708) eingebracht wird; und dadurch, dass sie zudem eine Steuervorrichtung (720) enthält, deren Ausgang mit dem zweiten Eingang des zweiten logischen "ODER-EXCLUSIV"-Gatters verbunden ist, wobei die Steuervorrichtung ein binäres Signal mit dem vorher erstellten logischen Wert "1" oder "0" liefert, so dass die zweiten binär codierten, in den Speichermitteln (702) gespeicherten Impulsen in den zweiten zirkulierenden Speicher (703) im Rythmus des Takts der Zeilenabtastung in ihrer richtigen oder umgekehrten Gestalt eingebracht werden und eine zweite Spürschaltung (704), die an ihren Eingängen die Ausgänge aller Stufen des zweiten zirkulierenden Speichers erhält und an ihrem Ausgang einen Impuls (S2) liefert, wenn alle Ausgänge den gleichen logischen Wert aufweisen; dabei ist der Ausgang zudem mit einem Zerorückstellungseingang (RAZ) des zweiten zirkulierenden Speichers verbunden.

8. Vorrichtung nach einem der Ansprüche 6 oder 7, dadurch gekennzeichnet, dass jeder zirkulierende Speicher (303, 703) durch ein Acht-Stufen-Schieberegister gebildet ist, und jede Spürschaltung (304, 704) durch ein logisches "NEIN-UND"-Gatter mit acht Eingängen gebildet ist, dessen Ausgang mit einem Zerorückstellungseingang (RAZ) des Schieberegisters verbunden ist.

## Claims

1. Digital process for controlling the correct reproduction of a composite television signal emitted or registered on a data support (10) at the rhythm of sweeping the lines of an image, comprising a stage consisting in the insertion, during the registration or emission process of the composite signal at a predetermined instant of each interval of the return of weeping one line, of at least one binary coded impulse (41) the succession of the logic values of which in time assumed by this impulse from one sweeping line to the other represents a sequence of binary states of predetermined temporal disposition; and a reading step of this sequence of binary states, during the reproduction process of composite television signals; characterized in that it comprises the following supplementary steps:

— generation during the reproduction process of a sequence of binary states, the succession of which in time reproduces the said predetermined disposition synchronized with the said sweeping of the lines;

— control device of a particular state to control the evolution in time of this succession of binary states of predetermined temporal disposition;

— detection of the appearance of successive alterations of the said read sequence of the binary states with respect to the predetermined disposition superior to a predetermined threshold;

— and conditional modification to this detection of the said control device so as to render it insensitive to alterations of the read sequence in number inferior to the said threshold.

2. Process according to claim 1, characterized in that the composite signal comprising sequential chrominance signals, a first binary-coded impulse takes alternately from one line to the following logic values "1" and "0" in order to represent, respectively, red $(D'_R)$ and blue $(D'_B)$ components of the chrominance signal; the said particular state to be controlled being the correct alternance of the components of the chrominance signal.

3. Process according to claim 2, characterized in that the coded impulse representing one of the components of the chrominance signal, emitted or registered during the sweeping line of rank n, is inserted, after logic inversion, into a predetermined instant of the interval of the return of the sweeping line of rank n — 1.

4. Process according to claim 1, characterized in that a second binary coded impulse (42) assumes logic values "1" or "0", representing a composite television signal registered respectively on a first part and a second part of the data support; the said particular state to be controlled being the reproduction of the signal registered on one of the said parts of the previously selected data support.

5. Process according to claim 4, characterized in that these two parts are the two faces (A, B) of a turning data support (10).

6. Control device for submitting the states to be controlled under the dependance of the logic value of binary-coded impulses according to the process of one of claims 1 to 5, comprising reading means (301) and memory means (302) of the binary-coded impulses, characterized in that it comprises, in addition, at least one shifting memory (303) comprising a predetermined number of stages into which is repetitively introduced, via a first input of an EXCLUSIVE-OR logic gate (308) with two inputs, a first binary-coded impulse (41) registered in the said memory means (302), the shifting occurring at the rhythm of the pace of sweeping one line $(H_3)$, and a detection circuit (304) receiving on its inputs the outputs of all the stages of the shifting memory (304) and delivering on its output an impulse transmitted to a return to zero input (RAZ) of the shifting memory when all the outputs are of the same logic value and a flip-flop circuit (307) the output of which is connected to the other input of the EXCLUSIVE-OR logic gate, and receiving on a clock input $(H_7)$ via an inverter (305) and a NOR logic gate (306) the signals present at the output of the detection circuit (304), the NOR logic gate (306) receiving, furthermore a sampling signal (Sup H) at the rhythm of the pace of sweeping a line.

7. Device according to claim 6, characterized in that it comprises a second shifting circuit (703) comprising a predetermined number of stages into which is introduced a second binary-coded impulse (42), via the first input of a second EXCLUSIVE-OR logic gate (708); and in that it comprises furthermore a control device (720) the output of which is connected to the second input of the second EXCLUSIVE-OR logic gate, the control device (720) supplying a binary signal of previously determined value "1" or "0"; so that the second binary coded impulses registered in the memory means (702) are introduced into the second shifting memory means (703) at the rhythm of the pace of sweeping a line, in their true form or in their inverted form and a second detection signal (704) receiving on its inputs the outputs of all the stages of the second shifting memory and delivering on its output an impulse $(S_2)$ when all the outputs have the same logic value, the output being furthermore connected to a return to zero input (RAZ) of the second shifting memory.

8. Device according to one of claims 6 or 7, characterized in that each shifting memory (303, 703) is constituted by an eight-stage shift register, and each detection circuit (304, 704) is constituted by a NAND logic gate having eight inputs, the output of which is connected to a return to zero input (RAZ) of the shift register.

Fig. 1

0 021 863

Fig.5

Fig.2

2

FIG.3

FIG. 4

## FIG. 6

V
B
R
Sup H

D/C  H   42        1/40

100       41       SS'      2'

$S_Y$   $S_{RB}$      SE   A

9      10   B

1b      1a      1

## FIG. 7

701

$H_2$   SL      702

742

$H_3$   bit 41      703   RAZ

$E_2$
$E_1$

708   780

720   "1"   "0"

730-1/730-8

704

740

$S_2$